(19) Europäisches Patentamt
European Patent Office
Office européen des brevets

(11) **EP 2 577 236 B1**

(12) **EUROPÄISCHE PATENTSCHRIFT**

(45) Veröffentlichungstag und Bekanntmachung des Hinweises auf die Patenterteilung:
**08.03.2017   Patentblatt 2017/10**

(21) Anmeldenummer: **11709442.5**

(22) Anmeldetag: **23.03.2011**

(51) Int Cl.:
*G01F 15/00* (2006.01)       *G01N 29/28* (2006.01)
*G10K 11/00* (2006.01)       *G10K 11/16* (2006.01)
*G01F 1/66* (2006.01)

(86) Internationale Anmeldenummer:
**PCT/EP2011/054466**

(87) Internationale Veröffentlichungsnummer:
**WO 2011/147604 (01.12.2011 Gazette 2011/48)**

(54) **ULTRASCHALLWANDLER ZUM EINSATZ IN EINEM FLUIDEN MEDIUM**

ULTRASONIC TRANSDUCER FOR USE IN FLUIDS

TRANSDUCTEUR D'ULTRASONS DESTINÉ À ÊTRE UTILISÉ DANS UN MILIEU FLUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.05.2010   DE 102010029283**

(43) Veröffentlichungstag der Anmeldung:
**10.04.2013   Patentblatt 2013/15**

(73) Patentinhaber: **Robert Bosch GmbH**
**70442 Stuttgart (DE)**

(72) Erfinder: **LANG, Tobias**
**70197 Stuttgart (DE)**

(56) Entgegenhaltungen:
**EP-A1- 2 101 315     US-A- 3 663 842**
**US-A- 4 425 803     US-A- 5 400 296**

EP 2 577 236 B1

**Beschreibung**

Stand der Technik

Aus dem Stand der Technik sind Ultraschallwandler für verschiedene Einsatzgebiete bekannt. So werden Ultraschallwandler beispielsweise in fluiden Medien wie beispielsweise Gasen und/oder Flüssigkeiten eingesetzt, um einen Füllstand und/oder eine Strömungseigenschaft, beispielsweise einen Massen- oder Volumenstrom oder eine Geschwindigkeit, des fluiden Mediums zu messen. Insbesondere kommen derartige Ultraschallwandler im Ansaug- und/oder Abgastrakt von Verbrennungsmotoren zum Einsatz. Alternativ oder zusätzlich können Ultraschallwandler auch beispielsweise als Abstandssensoren in Luft oder anderen Gasen oder Flüssigkeiten eingesetzt werden. Beispiele von Ultraschallwandlern, welche auch im Rahmen der vorliegenden Erfindung erfindungsgemäß modifiziert werden können, sind in DE 203 02 582 U1, EP 0 766 071 A1, in DE 10 2007 010 500 A1 oder in der nachveröffentlichten DE 10 2009 046 144.2 beschrieben.

Ultraschallwandler weisen in der Regel mindestens ein elektrisch-akustisches Wandlerelement auf, beispielsweise ein piezoelektrisches Wandlerelement, welches eingerichtet ist, um elektrische Signale in Ultraschallsignale umzuwandeln oder umgekehrt. So sind aus dem Stand der Technik Ultraschallwandler auf der Basis einer Piezokeramik bekannt, welche zusätzlich mindestens eine Impedanzanpassschicht umfassen können, beispielsweise eine λ/4-Impedanzanpassschicht, wobei das elektrisch-akustische Wandlerelement und die optionale mindestens eine Impedanzanpassschicht einen Wandlerkern bilden. Dieser Wandlerkern kann in ein Gehäuse, beispielsweise eine Gehäusehülse, eingebracht werden. Dabei besteht eine generelle Schwierigkeit darin, parasitäre Ultraschallpfade zu unterdrücken, welche durch die Materialien des Sensorgehäuses hindurch zum Wandlerkern oder in der Gegenrichtung verlaufen. Derartige parasitäre Ultraschallpfade würden ansonsten das Messsignal verfälschen, wodurch beispielsweise ein ermittelter Wert für die zu messende Strömungsrate häufig eine Toleranzgrenze überschreiten würde. Aus dem Stand der Technik, beispielsweise den oben zitierten Druckschriften, sind daher grundsätzlich Dämpfungselemente bekannt, welche im Inneren des Gehäuses eingesetzt werden. Beispielsweise können Entkopplungselemente zwischen dem Wandlerkern und der Gehäusehülse vorgesehen sein. Außerdem wird in vielen Fällen innerhalb der Hülse ein Dämpfungsverguss vorgesehen. Aus dem Stand der Technik sind dabei verschiedene Dämpfungsmaterialien bekannt. Aus H. Wang et al: "Passive Materials for High Frequency Ultrasound Transducers", 1999 SPIE Conference Proceedings, Society of Photo-Optical Instrumentation Engineers, sind passive Materialien zur Impedanzanpassung, zum Verguss und als Linsenmaterialien für Ultraschallgeber bekannt. Hierbei werden Mischungen aus Metalloxiden und Kunststoffen sowie aus Wolfram und Kunststoffen eingesetzt. Aus F. El-Tantawy et al.: "A novel ultrasonic transducer backing from porous epoxy resin-titanium-silane coupling agent and plasticizer composites", Materials Letters 58 (2003) 154-158 sind Kompositmaterialien für die Ultraschalldämpfung bekannt, welche ein Epoxidharz mit Titan-Partikeln enthalten. Aus M. Grewe et al.: "Acoustic Properties of Particle/Polymer Composites for Ultrasonic Transducer Backing Applications", IEEE Transactions on Ultrasonics, Ferroelectrics and Frequency Control, Vol. 37, No. 6, November 1990, 506-514 sind ebenfalls Mischungen aus Wolfram-Partikeln und Vinyl-Kunststoffen als Dämpfungsmaterialien für Ultraschallwandler bekannt.

Insbesondere bei der Entwicklung von Strömungssensoren für Gase auf Basis der Messung von Ultraschalllaufzeiten stellt sich allgemein die Schwierigkeit, dass auch unter Verwendung einer Impedanzanpassungsschicht in der Regel nur relativ kleine Ultraschallamplituden in dem zu messenden Gas erzeugt werden können, so dass sich mit den Ultraschallsignalen überlagerte, durch das Sensorgehäuse übertragene Körperschallanteile besonders kritisch auswirken. Andererseits können die Ultraschallwandler in Gegenwart von aggressiven Medien nicht einfach durch weiche und damit meist wenig robuste Materialien Körperschall-entkoppelt in dem Gehäuse aufgehängt werden. Selbst eine Schutzfolie, die eine dahinter liegende, weiche Entkopplung überdeckt, überträgt meist einen nicht zu vernachlässigenden Körperschallanteil. Es besteht somit nach wie vor ein Bedarf an Dämpfungsstoffen, welche eine verbesserte Körperschallentkopplung des Ultraschallwandlers bewirken.

Offenbarung der Erfindung

Es werden dementsprechend ein Ultraschallwandler und ein Verfahren zur Herstellung eines Ultraschallwandlers vorgeschlagen, welche die oben beschriebenen Nachteile bekannter Ultraschallwandler vermeiden. Insbesondere trägt die Erfindung dazu bei, eine verbesserte Dämpfung eines Ultraschallwandlers zu bewerkstelligen, in der Weise, dass Körperschallanteile, zwar nicht notwendigerweise bezüglich ihrer Amplitude, aber bezüglich ihres Emissionszeitraums so begrenzt werden, dass sie zu Beginn des Empfangszeitraums für das eigentliche Nutzsignal bereits abgeklungen sind. Dadurch wird eine genauere Messung der Ultraschalllaufzeiten und damit wiederum eine genauere Strömungsmessung ermöglicht. Alternativ oder zusätzlich zum Einsatz in einer Strömungsmessung lassen sich die erfindungsgemäßen Ultraschallwandler jedoch auch für eine Vielzahl weiterer Anwendungen einsetzen, beispielsweise eine oder mehrere der oben genannten Anwendungen. Insbesondere lassen sich aufgrund der hervorragenden Dämpfungseigenschaften die vorgeschlagenen Ultraschallwandler in Vorrichtungen einsetzen, welche mindestens zwei Ultraschallwandler aufweisen, die miteinander wechselwirken. Auch andere Anordnungen sind jedoch grundsätzlich realisierbar.

Es wird ein Ultraschallwandler zum Einsatz in einem fluiden Medium, insbesondere einem Gas und/oder in einer Flüssigkeit, vorgeschlagen. Dieser umfasst mindestens ein Gehäuse und mindestens einen zumindest teilweise in dem Gehäuse aufgenommenen Wandlerkern. Unter einem Gehäuse ist dabei ein Gebilde zu verstehen, welches mindestens einen zumindest teilweise geschlossenen oder auch möglicherweise teilweise geöffneten Innenraum aufweist, beispielsweise einen Hohlraum. Das Gehäuse kann beispielsweise hülsenförmig ausgestaltet sein, insbesondere zumindest im Wesentlichen rotationssymmetrisch. Das Gehäuse kann insbesondere die Aufgabe realisieren, den im Innenraum des Gehäuses aufgenommenen Komponenten des Ultraschallwandlers einen Schutz gegenüber mechanischen und/oder chemischen Einflüssen zu bieten. Das Gehäuse kann beispielsweise aus einem Kunststoff und/oder einem metallischen Material hergestellt sein. Auch Keramikgehäuse sind jedoch grundsätzlich realisierbar.

Der Wandlerkern umfasst mindestens ein akustisch-elektrisches Wandlerelement. Unter einem akustisch-elektrischen Wandlerelement ist dabei ein Element zu verstehen, welches eingerichtet ist, um akustische Signale (beispielsweise Ultraschallwellen) in elektrische Signale umzuwandeln und/oder umgekehrt. Insbesondere kann es sich bei dem akustisch-elektrischen Wandlerelement um mindestens ein piezoelektrisches Wandlerelement handeln, beispielsweise eine Piezokeramik, vorzugsweise mit zwei oder mehr Elektroden. Auch andere Ausgestaltungen sind jedoch grundsätzlich denkbar. Weiterhin kann der Wandlerkern mindestens einen Impedanzanpasskörper, beispielsweise mindestens eine Impedanzanpassschicht, umfassen, beispielsweise eine Impedanzanpassschicht wie in dem oben genannten Stand der Technik beschrieben. Diese Impedanzanpassschicht weist vorzugsweise eine akustische Impedanz auf, welche zwischen derjenigen des akustisch-elektrischen Wandlerelements und derjenigen des fluiden Mediums liegt, idealerweise beim geometrischen Mittel dieser akustischen Impedanzen. Darüber hinaus können weitere Elemente in dem Wandlerkern vorgesehen sein, beispielsweise ein oder mehrere thermische Anpassschichten, welche beispielsweise eingerichtet sind, um einen Ausdehnungskoeffizienten des akustisch-elektrischen Wandlerelements an einen Ausdehnungskoeffizienten einer Impedanzanpassschicht oder allgemein eines Impedanzanpasskörpers anzupassen. Auch derartige Aufbauten sind bekannt. Somit kann der Wandlerkern beispielsweise einen mehrteiligen Aufbau aufweisen, mit dem akustisch-elektrischen Wandlerelement und, auf dessen dem fluiden Medium zuweisenden Seite, dem optionalen Impedanzanpasskörper sowie, weiterhin optional, zwischen dem Impedanzanpasskörper und dem akustisch-elektrischen Wandlerelement mindestens einen thermischen Anpasskörper. Beispiele werden unten noch näher erläutert.

In dem Gehäuse ist weiterhin zumindest ein Dämpfungsstoff aufgenommen. Dieser Dämpfungsstoff kann beispielsweise mindestens ein Dämpfungselement bilden oder einen Bestandteil eines derartigen Dämpfungselements bilden. Der Dämpfungsstoff kann beispielsweise das akustisch-elektrische Wandlerelement und/oder den Wandlerkern radial umgeben. Weiterhin kann der Dämpfungsstoff auch auf einer dem fluiden Medium abgewandten Seite des Wandlerkerns und/oder des akustisch-elektrischen Wandlerelements aufgenommen sein. Insbesondere sollte der Dämpfungsstoff vorzugsweise direkt an mindestens einer Stelle mit dem akustisch-elektrischen Wandlerelement in Berührung kommen. Insbesondere kann der Dämpfungsstoff zwischen dem akustisch-elektrischen Wandlerelement und/oder dem Wandlerkern und dem Gehäuse aufgenommen sein, beispielsweise in einem Zwischenraum zwischen dem Gehäuse und dem Wandlerkern. Verschiedene Ausgestaltungen werden unten noch näher beschrieben.

Der Dämpfungsstoff umfasst mindestens ein Matrixmaterial, also ein Material, welches vorzugsweise einen überwiegenden Anteil an dem gesamten Dämpfungsstoff bildet und welches beispielsweise eine homogene Matrix bilden kann. Insbesondere kann das Matrixmaterial mindestens einen Kunststoff umfassen, vorzugsweise einen duroplastischen Kunststoff und/oder ein Elastomermaterial. Alternativ oder zusätzlich ist jedoch grundsätzlich auch die Verwendung eines thermoplastischen Materials denkbar. Das Matrixmaterial kann insbesondere derart ausgestaltet sein, dass dieses im Wesentlichen den Zusammenhalt des Dämpfungsstoffs und/oder eines aus dem Dämpfungsstoff gebildeten Dämpfungskörpers bewirkt, indem dieses beispielsweise als Bindematerial zwischen sonstigen Bestandteilen des Dämpfungsstoffs wirkt.

Der Dämpfungsstoff umfasst weiterhin mindestens einen in das Matrixmaterial eingebrachten, beispielsweise eingemischten, ersten Füllstoff und mindestens einen in das Matrixmaterial eingebrachten, insbesondere eingemischten, zweiten Füllstoff. Die Füllstoffe können insbesondere in partikulärer Form vorliegen, so dass beispielsweise Partikel der Füllstoffe einander vorzugsweise nicht berühren, sondern der Zusammenhalt durch das Matrixmaterial bewirkt wird. Die Füllstoffe können insbesondere in dem Matrixmaterial im Wesentlichen homogen verteilt sein, beispielsweise dispergiert sein. Neben der Idee, zwei verschiedene Füllstoffe zu verwenden, besteht ein wesentlicher Gedanke der vorliegenden Erfindung darin, dass der erste Füllstoff (wobei auch mehrere erste Füllstoffe vorgesehen sein können) ein geringeres spezifisches Gewicht (d.h. eine geringere Dichte) aufweist als das Matrixmaterial und dass der zweite Füllstoff ein höheres spezifisches Gewicht aufweist als das Matrixmaterial.

Der Dämpfungsstoff kann insbesondere, wie oben ausgeführt, in mindestens einen Zwischenraum zwischen dem Gehäuse und dem Wandlerkern eingebracht sein. Der Wandlerkern kann insbesondere direkt oder indirekt entgegen einer Abstrahlrichtung des Ultraschallwandlers nach hinten gegen mindestens ein Abstützelement, insbesondere gegen mindestens ein Abstützelement des Gehäuses, abgestützt sein. Das Gehäuse kann zu diesem Zweck nach hinten, also auf der dem fluiden Medium abgewandten Seite, geschlossen ausgestaltet sein. Alternativ oder zusätzlich zu einer vollständigen Verschließung des Gehäuses auf der dem fluiden Medium abgewandten Seite können auch eine oder mehrere Öffnungen vorgesehen sein, durch welche eine Expansion des Wandlerkerns und/oder weiterer in dem Gehäuse aufgenommener Komponenten des Ultraschallwandlers nach hinten möglich ist, wobei gleichzeitig jedoch noch eine Abstützung gegeben sein soll. Alternativ oder zusätzlich kann das mindestens eine Abstützelement jedoch auch ein oder mehrere von dem Gehäuserand aus ins Innere des Ultraschallwandlers ragende Abstützelemente umfassen, beispielsweise einen oder mehrere Abstützkragen, Bördelkappen, nach innen geklappte Flügel oder ähnliches. Verschiedene Ausführungsbeispiele werden unten noch näher beschrieben.

Das Matrixmaterial kann insbesondere ein Kunststoffmaterial umfassen. Insbesondere kann das Matrixmaterial einen aushärtbaren Kunststoff umfassen, beispielsweise in einem ausgehärteten Zustand. Unter einem aushärtbaren Kunststoff ist dabei ein Kunststoff zu verstehen, welcher mindestens einen fluiden, fließfähigen Zustand aufweist, und mindestens einen ausgehärteten Zustand, in welchem der Kunststoff seine Form im Wesentlichen unter Einwirkung von im Betrieb des Ultraschallwandlers üblichen Kräften nicht oder zumindest nicht mehr makroskopisch verändert. Beispielsweise kann der Kunststoff bei der Aushärtung seine chemische Form verändern, beispielsweise indem während des Aushärtens ein Vernetzen des Kunststoffs stattfindet. Alternativ oder zusätzlich kann jedoch auch ein Phasenübergang stattfinden. Das Matrixmaterial kann beispielsweise ein Kunststoffmaterial umfassen, welches im ausgehärteten Zustand eine Härte zwischen 10 und 100 Shore A aufweist. Besonders bevorzugt sind Shore A-Härten zwischen 20 und 70, beispielsweise zwischen 50 und 60 und besonders bevorzugt bei 55, beispielsweise Zweikomponenten-Silikone mit einer Härte 55 Shore A. Insbesondere kann der Kunststoff mindestens ein Epoxid- und/oder mindestens ein Silikonmaterial umfassen. Allgemein können beispielsweise aushärtbare Elastomermaterialien verwendet werden. Der aushärtbare Kunststoff kann grundsätzlich einen beliebigen Aushärtungsprozess aufweisen. Beispielsweise kann eine chemisch induzierte Aushärtung auftreten. Alternativ oder zusätzlich können jedoch auch thermische und/oder photochemische Aushärtungsvorgänge eingesetzt werden. Der Kunststoff kann beispielsweise ein Einkomponenten- und/oder auch Mehrkomponenten-Kunststoff sein. Hiervon kann beispielsweise ein Härtermaterial vorgesehen sein, welches beispielsweise einem zweiten Material des Kunststoffs beigemischt wird, um chemisch einen Aushärtungsprozess zu starten. Insbesondere können Zweikomponenten-Silikonmaterialien eingesetzt werden. Wie unten noch näher erläutert wird, spielt dabei im nicht-ausgehärteten Zustand die Viskosität des Matrixmaterials und/oder des gesamten Dämpfungsstoffs in vielen Fällen eine entscheidende Rolle. Dabei ist es besonders bevorzugt, wenn das Matrixmaterial im nicht-ausgehärteten Zustand eine Viskosität von mindestens 200 mPas, insbesondere von mindestens 500 mPas, aufweist. Eine derartige Viskosität kann beispielsweise durch eine geeignete Auswahl des Matrixmaterials und/oder durch eine geeignete chemische Modifikation des Matrixmaterials realisiert werden. Unter einem nicht-ausgehärteten Zustand ist dabei allgemein ein Zustand zu verstehen, bei welchem das Matrixmaterial und/oder die Dämpfungsmasse derart verformbar sind, dass diese in das Gehäuse einbringbar sind. Hierbei kann, wie unten noch näher ausgeführt wird, beispielsweise ein Gießprozess eingesetzt werden. Das Matrixmaterial kann insbesondere im nicht-ausgehärteten Zustand thixotrope Eigenschaften aufweisen. Dies bedeutet, dass das Matrixmaterial vorzugsweise in einem Zustand, in welchem keine oder lediglich geringe Scherkräfte auf das Matrixmaterial wirken, eine hohe Viskosität aufweist, wohingegen bei einer Einwirkung von Scherkräften oder höheren Scherkräften eine geringere Viskosität auftritt.

Der erste Füllstoff weist ein geringeres spezifisches Gewicht auf als das Matrixmaterial. Insbesondere kann der erste Füllstoff ein spezifisches Gewicht aufweisen, welches bei maximal 0,9 des spezifischen Gewichts des Matrixmaterials liegt, vorzugsweise bei maximal 0,5 und besonders bevorzugt bei maximal 0,1 oder weniger. Der erste Füllstoff kann insbesondere eine oder mehrere der folgenden Füllstoffe aufweisen: Hohlkörper, insbesondere Hohlkugeln; Hohlkörper mit einer verformbaren (beispielsweise plastischen und/oder elastischen) Schale, insbesondere einer Kunststoffschale, beispielsweise aus Polyethylen oder einem anderen Kunststoffmaterial; Kunststoff-Hohlkörper, insbesondere Gas-gefüllte Kunststoff-Hohlkörper, insbesondere Gas-gefüllte Kunststoff-Hohlkugeln; Glas-Hohlkörper, insbesondere Gas-gefüllte Glas-Hohlkörper. Insbesondere kann es sich bei dem ersten Füllstoff, wie oben ausgeführt, um einen partikulären Füllstoff handeln, also einen Füllstoff, welcher eine Mehrzahl von Partikeln umfasst. Der erste Füllkörper kann insbesondere Partikel, beispielsweise Hohlkörper, mit einer Größe (beispielsweise einem Äquivalentdurchmesser, insbesondere einem $d_{50}$-Äquivalentdurchmesser) bei Normalbedingungen von maximal 200 $\mu$m aufweisen, vorzugsweise von maximal 100 $\mu$m und besonders bevorzugt von maximal 20 $\mu$m oder weniger als 20 $\mu$m. Der erste Füllstoff kann insbesondere ein spezifisches Gewicht von nicht mehr als 1,0 g/cm$^3$ aufweisen, insbesondere von nicht mehr als 0,5 g/cm$^3$, vorzugsweise von nicht mehr als 0,1 g/cm$^3$ und besonders bevorzugt von nicht mehr als 0,08 g/cm$^3$.

Der zweite Füllstoff kann ebenfalls vorzugsweise eine oder mehrere Arten von Partikeln umfassen. Insbesondere kann der zweite Füllstoff einen oder mehrere der folgenden Füllstoffe umfassen: ein Metall, insbesondere Wolfram; Wolframcarbid; Kupfer; Nickel; Neusilber; Bronze; eine ein Metall umfassende chemische Verbindung, beispielsweise ein Metalloxid, beispielsweise mit einem der zuvor genannten Metalle; einen pulverförmigen Füllstoff, insbesondere ein Metallpulver und/oder ein Keramikpulver. Der zweite Füllstoff kann insbesondere ein spezifisches Gewicht von mindestens 5 g/cm$^3$ aufweisen, vorzugsweise von mindestens 10 g/cm$^3$ und besonders bevorzugt von mindestens 15 g/cm$^3$.

Der zweite Füllstoff kann insbesondere ein Pulver mit einer Partikelgröße (beispielsweise wiederum einem Äquivalent-durchmesser, beispielsweise einem $d_{50}$-Äquivalentdurchmesser) von nicht mehr als 50 $\mu$m, vorzugsweise von nicht mehr als 10 $\mu$m und besonders bevorzugt von nicht mehr als 5 $\mu$m und insbesondere von nicht mehr als 2 $\mu$m umfassen. Der zweite Füllstoff kann insbesondere einen Gewichtsanteil von mindestens 15 %, vorzugsweise von mindestens 50 % und besonders bevorzugt von mindestens 66 % an dem Dämpfungsstoff aufweisen. Der erste Füllstoff kann insbesondere einen Gewichtsanteil von mindestens 0,05 %, vorzugsweise von mindestens 0,15 % und besonders bevorzugt von mindestens 0,5 % an dem Dämpfungsstoff aufweisen.

Neben einem Ultraschallwandler gemäß einer oder mehreren der oben beschriebenen Ausgestaltungen wird weiterhin ein Verfahren zur Herstellung eines Ultraschallwandlers vorgeschlagen. Insbesondere kann es sich dabei um einen Ultraschallwandler gemäß einer oder mehreren der oben beschriebenen Ausgestaltungen handeln, so dass bezüglich möglicher Ausgestaltungen des Ultraschallwandlers auf die obige Beschreibung verwiesen werden kann. Auch andere Ultraschallwandler sind jedoch grundsätzlich nach dem vorgeschlagenen Verfahren herstellbar. Die im Folgenden vorgeschlagenen Verfahrensschritte können dabei in der dargestellten Reihenfolge durchgeführt werden, können jedoch grundsätzlich auch in einer anderen Reihenfolge durchgeführt werden. Weiterhin sind auch zusätzliche, nicht genannte Verfahrensschritte durchführbar. Weiterhin können auch einzelne oder mehrere der genannten Verfahrensschritte zeitlich parallel, zeitlich überlappend oder einzeln oder in Gruppen wiederholt durchgeführt werden.

Bei dem vorgeschlagenen Verfahren wird mindestens ein Wandlerkern zumindest teilweise in ein Gehäuse eingebracht. Der Wandlerkern umfasst mindestens ein akustisch-elektrisches Wandlerelement. In das Gehäuse wird weiterhin mindestens ein Dämpfungsstoff eingebracht. In dem Dämpfungsstoff werden mindestens ein Matrixmaterial und mindestens ein in das Matrixmaterial eingebrachter erster Füllstoff sowie mindestens ein in das Matrixmaterial eingebrachter zweiter Füllstoff aufgenommen. Das Einbringen der Füllstoffe kann dabei ebenfalls Bestandteil des vorgeschlagenen Verfahrens sein. Der erste Füllstoff weist dabei ein geringeres spezifisches Gewicht auf als das Matrixmaterial, und der zweite Füllstoff weist ein höheres spezifisches Gewicht auf als das Matrixmaterial. Das Matrixmaterial kann insbesondere mindestens ein aushärtbares Material aufweisen, wobei das aushärtbare Material in einem nicht-ausgehärteten Zustand (was auch einen nicht vollständig ausgehärteten Zustand umfassen kann, siehe oben) in das Gehäuse eingebracht werden kann und anschließend ausgehärtet werden kann.

Mindestens einer der Füllstoffe, insbesondere der erste Füllstoff, können vor dem Einbringen in das Matrixmaterial, was vorzugsweise vor dem Einbringen des Dämpfungsmaterials in das Gehäuse erfolgt, auch durch einen oder mehrere Verfahrensschritte vorbehandelt werden. So kann insbesondere mindestens einer der Füllstoffe, insbesondere der erste Füllstoff, zunächst durch eine thermische Behandlung vorexpandiert werden und anschließend in das Matrixmaterial und/oder in den Dämpfungsstoff eingebracht werden. Dieses Verfahren ist besonders geeignet für Füllstoffe, welche Hohlkörper umfassen, beispielsweise Kunststoffhohlkörper und/oder Glashohlkörper, beispielsweise der oben beschriebenen Art. Vor der Vorexpansion kann der Füllstoff, beispielsweise der erste Füllstoff, insbesondere mit mindestens einer Komponente des Dämpfungsstoffs, insbesondere mit mindestens einer Komponente des Matrixmaterials, beispielsweise einer Harz-Komponente des Silikons, benetzt werden, um anschließend der Vorexpansion unterworfen zu werden. Zusätzlich oder alternativ kann eine Expansion der Füllstoffe, insbesondere des ersten Füllstoffs, auch nach dem Einbringen des Dämpfungsmaterials in das Gehäuse vorgenommen werden, beispielsweise vor oder während der Aushärtung des Matrixmaterials.

Für das Einbringen des Dämpfungsstoffs und/oder des Matrixmaterials in das Gehäuse kann insbesondere ein Gießprozess verwendet werden, beispielsweise ein Vakuumvergießprozess. Ein Vakuumvergießprozess kann insbesondere den Vorteil aufweisen, dass eine Entgasung des Dämpfungsstoffs und/oder des Matrixmaterials gleichzeitig und/oder unmittelbar vor dem Einbringen in das Gehäuse erfolgen kann. Der Dämpfungsstoff und/oder das Matrixmaterial kann nach dem Einbringen in das Gehäuse angeliert werden.

Bei dem vorgeschlagenen Ultraschallwandler und dem vorgeschlagenen Verfahren umfasst der Dämpfungsstoff also ein Matrixmaterial, beispielsweise einen dämpfenden Kunststoff, mit mindestens zwei Beimengungen in Form der mindestens zwei Füllstoffe, von denen eine leichter und die andere schwerer als das Matrixmaterial ist. Als Matrixmaterial kommt insbesondere ein Silikon in Frage. Als schwerere Beimengung sind insbesondere Metallpartikel geeignet. Die leichtere Beimengung kann beispielsweise in Form von Hohlräumen ausgestaltet sein. Diese sind beispielsweise direkt innerhalb des Matrixmaterials oder auch in einer zusätzlichen Ummantelung eingeschlossen, beispielsweise in Form von Kunststoff-Hohlkörpern und/oder Kunststoffhohlkugeln.

Die aus dem Stand der Technik bekannten Dämpfungsstoffe mit Metallbeimengungen dämpfen zwar das Nachschwingen des akustisch-elektrischen Wandlerelements vergleichsweise gut, da sie durch die hohe Dichte und damit hohe akustische Impedanz gut an dieses angepasst sind, leiten aber entsprechend viel Körperschall an das Gehäuse weiter. Schaumstoffe oder Dämpfungsstoffe mit Kunststoffhohlkugeln ohne Metallpartikel entkoppeln zwar recht gut, nehmen aber wegen der entsprechend geringen Dichte und damit kleinen akustischen Impedanz auch weniger Energie vom akustisch-elektrischen Wandlerelement auf, so dass das Wandlerelement auch nach kurzer impulshafter Anregung längere Zeit Schwingungen ausführt, die innerhalb dieses längeren Zeitraums über andere Körperschallpfade übertragen werden können. Eine solche Entkopplung wird bei Verwendung einer Schutzfolie über dem akustisch-elektrischen Wandlerelement beispielsweise durch diese Folie umgangen und ist dann in der Regel nutzlos. Schaumstoffe oder Dämpfungsstoffe mit Kunststoffhohlkugeln ohne Metallpartikel dämpfen außerdem radial- und dickenschwingende Piezoelemente vergleichsweise schlecht und sind allenfalls geeignet, mit relativ niedriger akustischer Impedanz eingekoppelte Schwingungen zu dämpfen, wie sie etwa bei einem Membranschwinger vorliegen, beispielsweise in Parkpilotsystemen.

Überraschenderweise wurde nunmehr erfindungsgemäß erkannt, wie unten durch Vergleichsmessungen noch näher belegt wird, dass gerade die Kombination aus schweren und leichten Füllstoffen (jeweils bezogen auf das Matrixmaterial) besonders gute Dämpfungseigenschaften aufweist. Dies ist insofern überraschend, da die akustische Impedanz bei Beimengung leichterer und schwererer Füllstoffe makroskopisch gesehen meist durch die schwereren Füllstoffe dominiert wird, insbesondere wenn die schwereren Füllstoffe deutlich schwerer als das Matrix-Material sind und einen relativ hohen Anteil innerhalb des gesamten Dämpfunsgstoffs einnehmen. So könnte man annehmen, dass die zusätzliche Beimengung leichterer Füllstoffe kaum eine Veränderung mit sich bringen sollte. Entgegen dieser Annahme zeigt sich aber, dass nur die Kombination derartiger Füllstoffe zu einer effektiven Entkopplung führt. Beispielsweise kann der erste Füllstoff Bereiche in dem Dämpfungsstoff bilden, welche eine geringere akustische Impedanz aufweisen als das Matrixmaterial. Der zweite Füllstoff kann in dem Dämpfungsstoff Bereiche (beispielsweise wiederum partikuläre Einschlüsse) bilden, die eine höhere akustische Impedanz aufweisen als diejenige des Matrixmaterials. Auf diese Weise kann die Kombination eines Kunststoffs mit eingeschlossenen Bereichen höherer und niedriger akustischer Impedanz zu einer effektiven Entkopplung führen. Der Ultraschallwandler kann insbesondere derart ausgestaltet sein, dass das Gehäuse zu dem fluiden Medium hin mindestens eine Kopplungsöffnung aufweist, über welche Ultraschallsignale an das fluide Medium abgegeben und/oder aus dem fluiden Medium aufgenommen werden können. Diese Kopplungsöffnung kann insbesondere durch eine Schutzfolie verschlossen sein. Durch den Dämpfungsstoff können die negativen Auswirkungen der Schutzfolie zumindest teilweise kompensiert und gleichzeitig die Vorteile einer derartigen Schutzfolie genutzt werden. Die effektivere Dämpfung und/oder Entkopplung eines erfindungsgemäßen Ultraschallwandlers führt dazu, dass insgesamt weniger Dämpfungsstoff benötigt wird als bei herkömmlichen Ultraschallwandlern, insbesondere ein geringeres Volumen an Dämpfungsstoff. Dadurch wird der aufgrund thermischer Ausdehnung des Dämpfungsstoffs, beispielsweise des Dämpfungsvergusses, auf die Anschlussdrähte wirkende Hub deutlich reduziert. Beispielsweise kann der Dämpfungsstoff von der Menge her in dem Gehäuse derart reduziert werden, dass die Oberfläche des akustisch-elektrischen Wandlerelements, beispielsweise die Piezooberfläche, gerade abgedeckt ist, so dass diese beispielsweise um nicht mehr als 1 mm mit dem Dämpfungsstoff bedeckt ist. Auch Bedeckungen mit weniger als 1 mm, beispielsweise mit nicht mehr als 0,5 mm, sind grundsätzlich möglich. Mit einer gerade eben abgedeckten Oberfläche des akustisch-elektrischen Wandlerelements, einschließlich der zugehörigen Kontaktstellen, werden letztere effektiv geschützt und sind deutlich robuster, beispielsweise gegenüber Temperaturschocks, als bei einer höheren Dämpfungsfüllung des Gehäuses.

Kurze Beschreibung der Figuren

Ausführungsbeispiele der Erfindung sind in den Figuren dargestellt und werden in der nachfolgenden Beschreibung näher erläutert.

Es zeigen:

| | |
|---|---|
| Figur 1 | ein Ausführungsbeispiel einer Ultraschall-Sensoranordnung zur Bestimmung von Strömungseigenschaften; |
| Figuren 2 bis 6 | verschiedene Ausgestaltungen erfindungsgemäßer Ultraschallwandler; |
| Figuren 7A und 7B | Signalverläufe der Ultraschallwandler in einer Sensoranordnung beispielsweise gemäß Figur 1 für verschiedene erfindungsgemäße und nicht-erfindungsgemäße Dämpfungsstoffe; |
| Figur 8 | eine schematische Zusammensetzung eines erfindungsgemäßen Dämpfungsstoffs; und |
| Figur 9 | ein schematisches Verfahren zur Herstellung eines erfindungsgemäßen Dämpfungsstoffs. |

Ausführungsformen der Erfindung

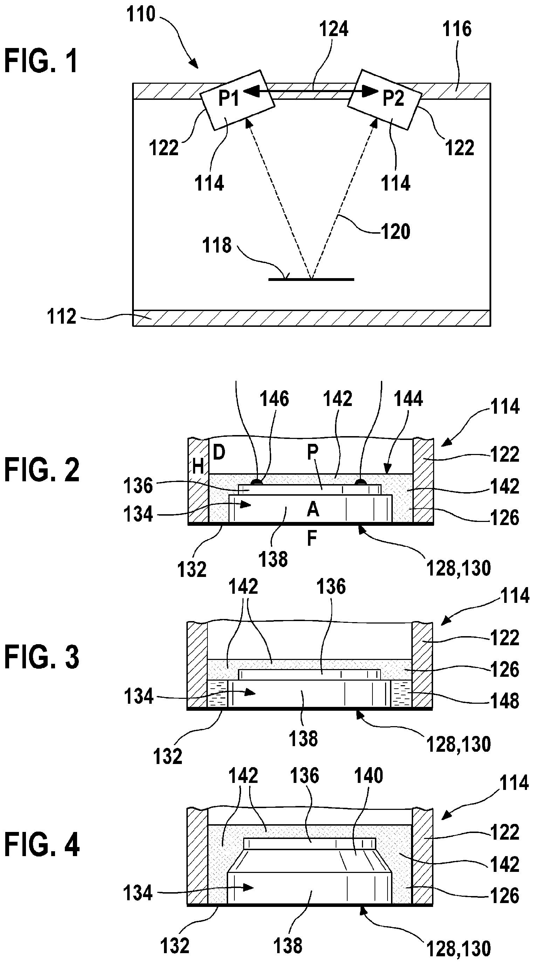

In Figur 1 ist ein Ausführungsbeispiel einer Sensoranordnung 110 dargestellt, welche beispielsweise zur Bestimmung von Strömungseigenschaften eines fluiden Mediums in einem Strömungsrohr 112 eingesetzt werden kann. Die Sensoranordnung 110 umfasst in den dargestellten Ausführungsbeispielen zwei Ultraschallwandler 114, welche in eine Rohrwand 116 des Strömungsrohrs 112 eingebracht sind und welche in Figur 1 mit P1 und P2 bezeichnet sind.

Die Sensoranordnung 110 kann beispielsweise eingesetzt werden, um eine Strömungsrate durch das Strömungsrohr 112 zu ermitteln. Die beiden in Strömungsrichtung versetzt montierten Ultraschallwandler 114 (P1 und P2) senden sich direkt oder, wie in Figur 1 dargestellt, über eine Reflexionsfläche 118, gegenseitig Ultraschallpulse zu. Diese gewünschte Signalausbreitung der Ultraschallsignale wird auch als Nutzpfad 120 bezeichnet und ist in Figur 1 gestrichelt dargestellt. Außerdem wird zwischen den beiden Ultraschallwandlern 114 Körperschall über die Rohrwand 116 und/oder über Gehäuse 122 der Ultraschallwandler 114 übertragen. Diese Körperschallübertragung ist in Figur 1 symbolisch mit dem durchgezogenen Pfeil 124 bezeichnet.

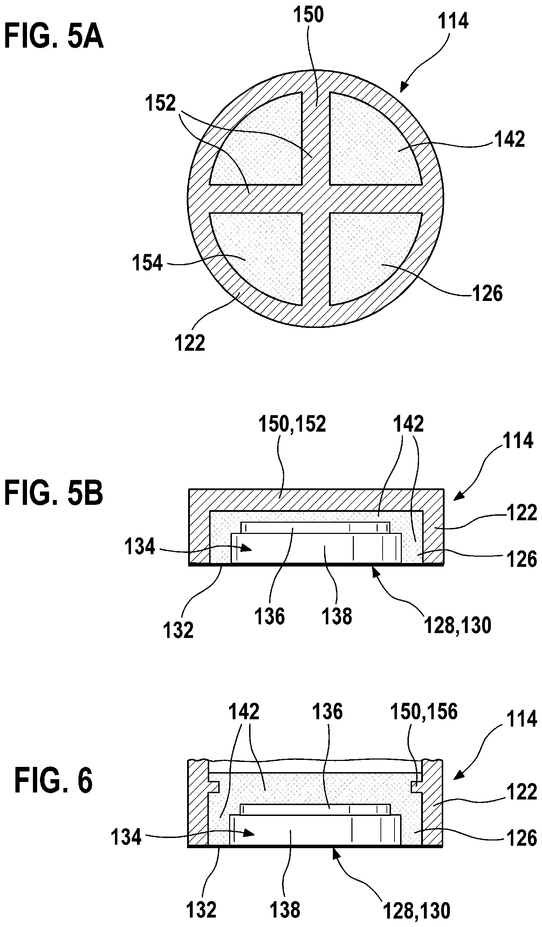

In den Figuren 2 bis 6 sind verschiedene Ultraschallwandler 114 schematisch dargestellt. Dabei zeigen die Figuren 2 bis 4, 5B und 6 jeweils Schnittdarstellungen der Ultraschallwandler 114 von der Seite, wohingegen Figur 5A eine Rückseiten-Ansicht, von einer dem fluiden Medium abgewandten Seite, des Ultraschallwandlers 114 gemäß Figur 5B zeigt. Die Ultraschallwandler 114 umfassen jeweils Gehäuse 122 mit einem Innenraum 126. Die Gehäuse 122 sind beispielsweise im Wesentlichen hülsenförmig ausgestaltet und weisen zu dem fluiden Medium hin eine Kopplungsöffnung 128 auf, an welcher sich eine Abstrahlfläche 130 zum Abstrahlen und/oder Aufnehmen von Ultraschallsignalen bildet. Die Abstrahlöffnung 128 ist in dem dargestellten Ausführungsbeispiel von einer Schutzfolie 132 überspannt, beispielsweise einer Kunststoff-Schutzfolie. In dem Innenraum 126 ist weiterhin mindestens ein Wandlerkern 134 aufgenommen. Die primäre akustisch-elektrische Wandlung, beispielsweise eine elektromechanische Wandlung, erfolgt innerhalb eines in dem Wandlerkern 134 enthaltenen akustisch-elektrischen Wandlerelements 136. Beispielsweise kann es sich hierbei um eine elektrisch kontaktierte Piezokeramik handeln, welche daher in Figur 2, ohne Beschränkung weiterer möglicher Ausgestaltungen, auch mit P bezeichnet ist. Weiterhin erfolgt eine akustische Impedanzanpassung des akustisch-elektrischen Wandlerelements 136 an das zu messende Medium durch eine Impedanzanpassschicht 138, welche in Figur 2 auch mit A bezeichnet ist. Die Schutzfolie 132 ist in Figur 2 mit F bezeichnet. Weiterhin kann der Wandlerkern 134 weitere Elemente umfassen, beispielsweise, wie in Figur 4 exemplarisch gezeigt, mindestens einen thermischen Anpasskörper 140, insbesondere zwischen dem akustisch-elektrischen Wandlerelement 136 und der Impedanzanpassschicht 138. Verschiedene andere Ausgestaltungen sind möglich. Der Wandlerkern 134 ist in dem in den Figuren exemplarisch hülsenförmig dargestellten Gehäuse 122 untergebracht und gegen das zu messende Medium durch die Schutzfolie 132 abgedeckt, um beispielsweise vor Feuchtigkeit, aggressiven Medien und abrasiven Partikeln zu schützen.

Weiterhin ist in dem Innenraum 126, also in dem Wandlerinneren, ein Dämpfungsstoff 142 platziert, welcher auch als Dämpfungsmaterial D bezeichnet werden kann, um den Wandlerkern 134 zu bedämpfen. Dieser Dämpfungsstoff 142 kann beispielsweise in Form eines Silikons und/oder als Vergussmasse realisiert sein. Der Dämpfungsstoff 142 kann, wie in den Ausführungsbeispielen in den Figuren 2, 4, 5A, 5B und 6 gezeigt, bis zu einer Füllhöhe 144 einen Zwischenraum zwischen dem Wandlerkern 134 und dem Gehäuse 122 vollständig ausfüllen. Die Füllhöhe 144 kann so gewählt sein, dass eine von dem fluiden Medium weg weisende Oberfläche des Wandlerkerns 134 und/oder Anschlusskontakte 146 vorzugsweise vollständig von dem Dämpfungsstoff 142 bedeckt sind. Alternativ oder zusätzlich können in den Zwischenraum zwischen dem Wandlerkern 134 und dem Gehäuse 122 noch breitere Elemente eingebracht sein, wie in dem Ausführungsbeispiel in Figur 3 exemplarisch gezeigt ist. In diesem Fall kann beispielsweise noch ein Stabilisierungselement 148 in dem Zwischenraum aufgenommen sein. Beispielsweise kann dieses Stabilisierungselement 48 ein Material aus einem Flüssigsilikon (beispielsweise einem Liquid Silicone Rubber, LSR) umfassen. Das Stabilisierungselement 148 kann beispielsweise zur Zentrierung und/oder Stabilisierung des Wandlerkerns 134, insbesondere der Impedanzanpassschicht 138, dienen und/oder im Endprodukt die Funktion eines Ausgleichselements zwischen dem Wandlerkern 134, insbesondere der Impedanzanpassschicht 138, und dem Gehäuse 122 erfüllen, so dass beispielsweise Verspannungen innerhalb des Ultraschallwandlers 114 reduziert werden können.

Zusätzlich können in dem Wandlerkern 134, wie oben beschrieben, mindestens ein weiteres Material und/oder mindestens ein weiteres Element aufgenommen sein. Beispielsweise kann es sich dabei, wie oben ausgeführt, um mindestens einen thermischen Anpasskörper 140 handeln. Dieser Anpasskörper bzw. diese Schicht kann genutzt werden, um durch thermische Ausdehnung der Impedanzanpassschicht 138 erzeugte Verspannungen vom akustisch-elektrischen Wandlerelement 138, beispielsweise dem Piezoelement, fernzuhalten. Dazu sollte dieser thermische Anpasskörper 140 einen Ausdehnungskoeffizienten nahe demjenigen des akustisch-elektrischen Wandlerelements 136 aufweisen, beispielsweise um ca. 10 ppm/°K oder geringer. Zusätzlich oder alternativ kann dieser thermische Anpasskörper 140 genutzt werden, um die Biegefähigkeit des akustisch-elektrischen Wandlerelements 136, beispielsweise des Piezos, einzuschränken. Gerade dünnere Piezos weisen nämlich zusätzlich zu den primär genutzten Planar- und Dickenmoden eine Biegeschwingung auf, die mit einer anderen akustischen Impedanz in den umgebenden Dämpfungsstoff 142 einkoppelt. Meist ist es schwierig, einen Dämpfungsstoff so einzustellen, dass alle drei Schwingungstypen effektiv bedämpft werden. Zudem kann der thermische Anpasskörper 140 außerdem akustische Kopplungswirkungen aufweisen, insbesondere die Impedanzanpassung an das zu messende Medium weiter verbessern, da das entsprechende Material in der Regel eine akustische Impedanz zwischen derjenigen des akustisch-elektrischen Wandlerelements und derjenigen der Impedanzanpassschicht 138 aufweisen kann. Insofern kann dieser thermische Anpasskörper 140 auch als Teil der Impedanzanpassungsschicht 138 bzw. eines Impedanzanpasskörpers angesehen werden, welche dann bezüglich ihrer Materialeigenschaften in unterschiedliche Bereiche aufzuteilen sind und/oder einen Gradienten oder eine Stufung in den Eigenschaften aufweisen. Einzelne dieser Bereiche können auch weitere Funktionen erfüllen, beispielsweise den Haftungsaufbau gegenüber dem akustisch-elektrischen Wandlerelement 136 und/oder der Piezoelektrode weiter verbessern.

Wie insbesondere in Figur 5 dargestellt, kann der Ultraschallwandler 114 weiterhin mindestens ein Stabilisierungselement und/oder mindestens ein Abstützelement 150 umfassen. Mittels dieses Abstützelements 150 kann das Innere des Ultraschallwandlers 114 gegenüber einem vom Messmedium aus anliegenden Druck stabilisiert werden, indem dieser Druck über die Folie 132, den Wandlerkern 134 und den Dämpfungsstoff 142 an das Gehäuse 122 weitergegeben wird. Das Abstützelement 150 kann dabei, wie in den Figuren 5A und 5B gezeigt, einen rückseitigen Verschluss des Gehäuses 122 aufweisen, welcher vollständig oder teilweise erfolgen kann. In den Figuren 5A und 5B ist dies durch Streben 152 realisiert, zwischen welchen Öffnungen 154 angeordnet sein können. In dem Ausführungsbeispiel gemäß Figur 6 ist hingegen ein umlaufender Rand 156 vorgesehen, welcher auch als Bördelung oder ähnliches ausgestaltet sein kann. Verschiedene andere Ausgestaltungen, welche eine Überleitung eines stirnseitigen Drucks auf das Gehäuse 122 ermöglichen, sind denkbar. So kann das Abstützelement 150 beispielsweise Einschnürungen, Absätze, Abstützflächen oder Abstützstege oder Kombinationen der genannten und/oder anderer Abstützelemente 150 aufweisen. Ein zu starkes oder gar vollständiges Verschließen des Gehäuses 122 ist allerdings in der Regel ungünstig, da sich dann die thermische Expansion und/oder Kontraktion des Dämpfungsstoffs 142 bei Temperaturänderungen nur in Richtung des Messmediums entspannen kann, womit dann die Schutzfolie 132 oder deren Befestigung an dem Gehäuse 122 zu stark belastet würde. Die genannte Maßnahme des Abstützelements 150 ist in unterschiedlichen Kombinationen mit den zuvor aufgeführten Varianten der Ultraschallwandler 114 realisierbar.

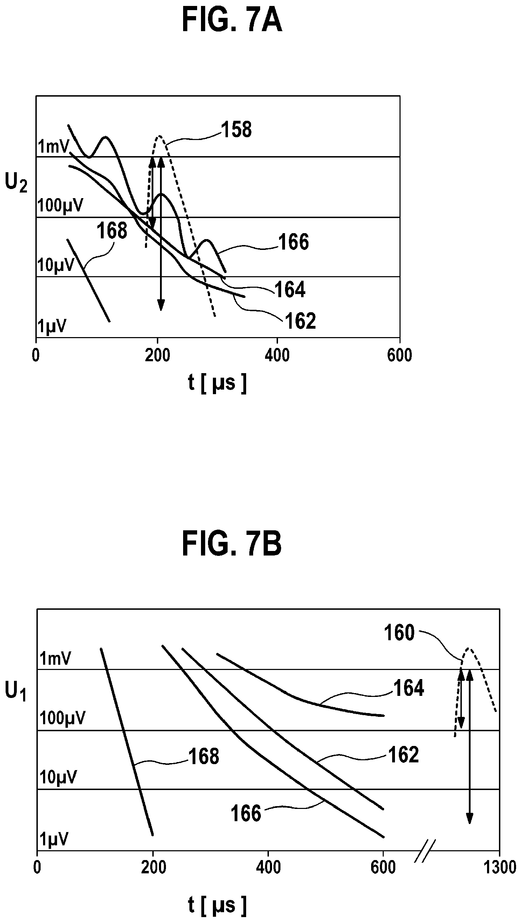

In den Figuren 7A und 7B sind schematisch Zeitabläufe von Sende- und Empfangsereignissen sowie der Signalamplituden dargestellt. Gezeigt ist dabei in Figur 7A exemplarisch ein Signal, beispielsweise ein Spannungssignal, an dem zweiten Ultraschallwandler 114 (P2) in Figur 1, und in Figur 7B ein Signal U1 an dem ersten Ultraschallwandler 114 (P1) in Figur 1. Aufgetragen sind jeweils die Signale U2 bzw. U1 als Funktion einer Zeit t in $\mu$s. Dabei wurde als Zeitnullpunkt jeweils der Sendezeitpunkt am Ultraschallwandler P1 definiert. Je nach Messmedium, Temperatur, Abstand der Ultraschallwandler 114, Strömungsrate und ähnlichen Parametern trifft ein Nutzsignal dann beispielsweise 200 $\mu$s später am jeweiligen anderen Wandler P2 ein. Das Nutzsignal am Ultraschallwandler P2 ist in Figur 7A mit der Bezugsziffer 158 bezeichnet, und das Nutzsignal am Ultraschallwandler P1 in Figur 7B mit der Bezugsziffer 160. Die Ultraschallmessung in entgegengesetzter Richtung, also am Ultraschallwandler P1, wird beispielsweise nach 1 ms gestartet, indem an P2 ein Ultraschallsignal gesendet wird, welches beispielsweise bei etwa 1200 $\mu$s an P1 empfangen wird (Kurve 160 im Schaubild 7B).

Weiterhin ist in den Figuren 7A und 7B ein Verhalten von vier unterschiedlichen Dämpfungsstoffen dargestellt. Dabei zeigen die Kurven 162 bis 168 verschiedene Störsignale, also Signale, welche nicht durch die eigentlichen Nutzsignale 158 bzw. 160 bedingt sind. Die Kurve 162 zeigt ein Störsignal für Silikon als Dämpfungsstoff 142, die Kurve 164 ein Störsignal für Silikon mit Elastomerhohlkugeln als Füllstoff, die Kurve 166 ein Störsignal für Silikon und Wolfram-Partikel als Dämpfungsstoff 142, und die Kurve 168 ein Störsignal für Silikon als Matrixmaterial mit Elastomerhohlkugeln und Wolfram als Füllstoffen. Die Figuren 7A und 7B zeigen mit den Kurven 162 bis 168 also das Verhalten von vier unterschiedlichen Dämpfungsstoffen 142. Als Kunststoffhohlkugeln wurden dabei Kunststoffhohlkugeln vom Typ Expancell® der Firma Akzo Nobel verwendet. Dies wird unten exemplarisch noch näher erläutert. Wolfram wurde in Form von Wolfram-Partikeln eingebracht.

Wie die Figur 7B zeigt, ist das Nachschwingen nach dem Sendevorgang an P1 nur bei einer sehr schwachen Dämpfung kritisch. In diesem Fall würde P1 noch nachschwingen, während das Signal von P2 her einläuft, und damit das zu messende Signal verfälschen. Eine solche schwache Dämpfung ist beispielsweise dann gegeben, wenn ein zu weiches Silikon verwendet wird und/oder wenn der Dämpfungsstoff 142 aufgrund von beigemengten Hohlkugeln zu leicht ist und damit impedanzfehlangepasst ist gegenüber dem akustisch-elektrischen Wandlerelement 136, beispielsweise dem Piezo. Ansonsten ist das Nachschwingen weniger kritisch als das Körperschallübersprechen zwischen den beiden Ultraschallwandlern 114. Das Übersprechen von P1 auf P2 ist sowohl für Silikon als auch für Silikon mit Kunststoffhohlkugeln oder Wolfram-Partikeln kritisch, d.h. weder die Hohlkugeln noch das Wolfram führen zu einer Verbesserung. Diese Zusätze verschlechtern sogar tendenziell das Übersprechen, da bei Hohlkugeln der Piezo zu wenig bedämpft wird (akustische Fehlanpassung) und da bei Wolfram die akustische Anpassung so gut wird, dass der Körperschall ebenfalls zunimmt. Silikon hingegen mit Füllstoffen in Form von Hohlkugeln und Wolfram zeigt ein völlig anderes Verhalten, wie sich aus der Kurve 168 ergibt, welches sich vor allem in einer sehr schnellen Abnahme der Schwingungsenergie äußert. Nur in diesem Fall ist das zeitliche Empfangsfenster von 200 $\mu$s in Figur 7A, also das Empfangsfenster bis zum Eintreffen des Nutzsignals 158, frei von Körperschallanteilen, welche direkt vom Ultraschallwandler P1 zum Ultraschallwandler P2 übertragen werden. Zwar ist das Nachschwingen des akustisch-elektrischen Wandlerelements 136 in der Regel weniger kritisch, aber dafür kann anhand dieses Parameters die Funktionsweise des Dämpfungsmaterials besser verstanden werden. Zunächst ist es überraschend, dass die Hohlkugelbeimengungen, zusammen mit dem Wolfram, das Nachschwingen viel stärker beeinflussen als Wolfram als Füllstoff alleine. Offensichtlich wird Wolfram gebraucht, um den Schall ins Dämpfungsmaterial überhaupt einzukoppeln. Silikon und Hohlkugeln alleine dämpfen wahrscheinlich gut, sobald sich Schall einmal im Dämpfungsstoff 142 befindet, aber aufgrund der akustischen Fehlanpassung gelangt der Schall erst gar nicht ins Material hinein und wird deshalb auch nicht gedämpft. Andererseits scheint Silikon mit Wolfram allein die Schallenergie zwar aufzunehmen, aber nicht effektiv genug zu dämpfen. Eventuell wird in diesem Fall sogar die Schwingungsenergie wieder an das akustisch-elektrische Wandlerelement 136 zurückgegeben. Für letztere These spricht der oszillierende Körperschallverlauf der Kurve 166 in diesem Material. Erst das Silikon als Matrixmaterial mit dem schweren, akustisch harten Füllstoff Wolfram und dem leichten, akustisch weichen Füllstoff der Hohlkugeln ist in der Lage, die Schwingungsenergie aufzunehmen (durch den schweren Füllstoff Wolfram) und zu dämpfen (durch den leichten Füllstoff in Form der Hohlkugeln). Vermutlich spielen bei letzterer Dämpfung nicht nur die Streuung an den Füllstoffen, sondern auch Dissipation durch diabatische/adiabatische Kompressionen der Hohlkugeln eine Rolle.

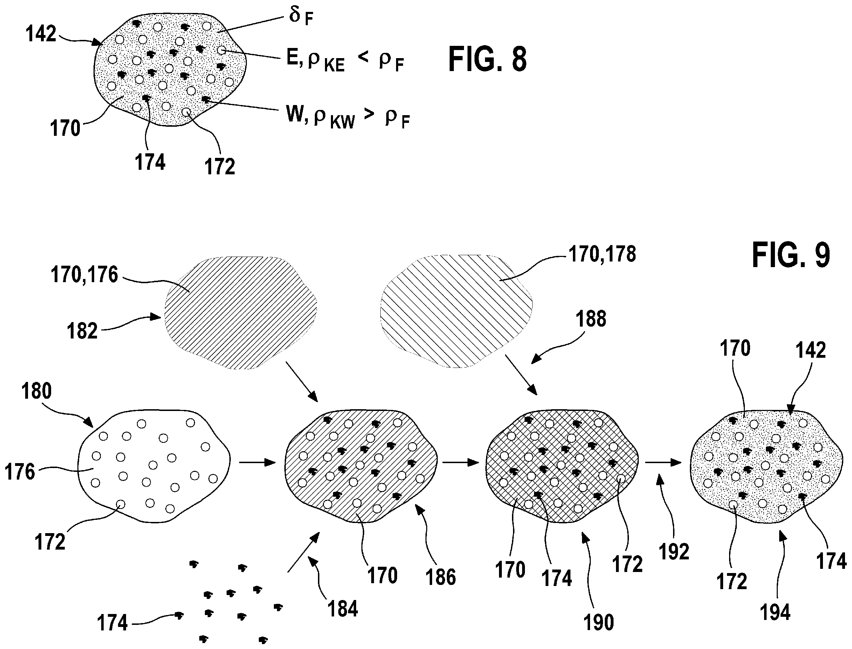

Anhand der Figuren 8 und 9 sollen schließlich mögliche Dämpfungsstoffe 142 sowie deren Herstellung und Verarbeitung exemplarisch beschrieben werden. Wie oben ausgeführt, umfasst der Dämpfungsstoff 142 erfindungsgemäß mindestens ein Matrixmaterial 170 sowie mindestens einen ersten Füllstoff 172 (in Figur 8 durch nichtausgefüllte Kreise dargestellt und auch mit "E" bezeichnet) sowie mindestens einen zweiten Füllstoff 174 (in Figur 8 symbolisch durch ausgefüllte Partikel dargestellt und auch mit "W" bezeichnet). Als Matrixmaterial (auch als Grundmaterial bezeichnet) des Dämpfungsstoffs 142 wurde in Mustern ein auf den Temperatureinsatzbereich von -40 °C bis 140 °C abgestimmtes, gut haftendes 2K-Silikon mit einer Härte von 55 Shore A verwendet. Es sei darauf hingewiesen, dass die im Folgenden beschriebenen Ausführungsbeispiele lediglich exemplarisch zu verstehen sind, und dass auch andere Matrixmaterialien 170 sowie andere Füllstoffe 172, 174 als die dargestellten Materialien eingesetzt werden können.

Als erster Füllstoff 172 wurden in einer ersten Variante Kunststoffhohlkugeln verwendet. Diese Kunststoffhohlkugeln können zusammen mit einem zweiten Füllstoff 174 in Form von schwereren Partikeln unter Umständen für eine hinreichende Körperschallreduktion ausreichend sein, wie an einzelnen Mustern beobachtet werden konnte. Bei einer Entgasung des Dämpfungsstoffs 142, beispielsweise im Vakuum, zeigt sich hingegen keine ausreichende Entkopplung aufgrund der fehlenden Hohlräume und damit aufgrund des fehlenden ersten Füllstoffs 172. Die Kunststoffhohlkugeln wurden in einem Gewichtsanteil von 1 % verwendet. Die Kunststoffhohlkugeln werden auch als "Mikroballons" bezeichnet. Diese können beispielsweise zur Harzkomponente des Silikons beigemischt werden. Dazu wurden in der zweiten Variante vorzugsweise vorexpandierte, Butangas-gefüllte Vinylidenchloridkunstharz-Hohlkugeln (Vinylidenchlorid-Acrylonitril-Copolymer) verwendet, die von der Firma Expancell unter gleichnamiger Markenbezeichnung hergestellt werden.

Als zweiter Füllstoff 174 wurde Wolfram-Metallpulver mit einer Partikelgröße von ca. 2 $\mu$m in einem Gewichtsanteil von 2 : 1 ebenfalls in die Harz-Komponente eingemischt, bevor der Härter zugegeben wurde. Dies ist exemplarisch in den Figuren 8 und 9 gezeigt. Während Figur 8 exemplarisch den fertigen Dämpfungsstoff 142 zeigt, zeigt Figur 9 einen Verfahrensgang einer möglichen Herstellung dieses Dämpfungsstoffs 142. Dabei bezeichnet die Bezugsziffer 176 eine Harz-Komponente des Matrixmaterials 170, und die Bezugsziffer 178 eine Härter-Komponente des Matrixmaterials 170. Nach dem Mischen des ersten Füllstoffs 172 und, anschließend oder zuvor, des zweiten Füllstoffs 174 mit der Harz-Komponente 176 wird die Härter-Komponente 178 zugegeben.

Optional können als erster Füllstoff 172 vorexpandierte Kunststoffhohlkugeln verwendet werden. Die Verwendung vorexpandierter Kunststoffhohlkugeln ist vorteilhaft in der Aushärtungsphase des Dämpfungsstoffs 142. Ansonsten würden sich während der Aushärtung möglicherweise starke Volumenänderungen ergeben, die den Zusammenhalt des Dämpfungsstoffs 142 und letztendlich die Materialeigenschaften negativ beeinflussen könnten. Insbesondere müsste prozesstechnisch sichergestellt werden, dass die Kunststoffhohlkugeln zuerst expandieren, bevor das Silikon vernetzt, damit keine Spannungen durch Expansion der Hohlkugeln innerhalb des schon vernetzten Silikons auftreten. Letztere könnten sich während eines anschließenden Temperaturbehandlungsschritts, beispielsweise in Form eines Temperns, in Form von Kompression der Hohlkugeln abbauen. Eine entsprechende Prozessführung ist zwar möglich, ist jedoch in der Praxis nicht leicht zu kontrollieren.

Die Kunststoffhohlkugeln werden daher in dem in Figur 9 gezeigten Verfahren vorzugsweise nicht direkt ins Silikon eingemischt, sondern als erstes benetzt, beispielsweise mit der Harz-Komponente 176 des Matrixmaterials 170. Die benetzten Kunststoffhohlkugeln werden in Figur 9 auch als Master-Batch 180 bezeichnet. Die derart benetzten Kunststoffhohlkugeln oder allgemein der derart benetzte erste Füllstoff 172, also ein erster Füllstoff 172, welcher mit mindestens einer Komponente des Matrixmaterials 170 benetzt ist, wird dann durch eine Temperatureinwirkung vorexpandiert. Dieser so genannte Master-Batch wird dann im benötigten Mischungsverhältnis mit der übrigen Harz-Komponente 176, beispielsweise dem Silikonharz, vermischt bzw. diesem zugesetzt, gleichzeitig, vor oder nach dem Zusetzen des zweiten Füllstoffs 174.

Das derart mit schweren und leichten Füllstoffen versehene Silikon wird vorzugsweise mindestens einem Entgasungsschritt unterworfen. Beispielsweise kann eine Entgasung durch Vakuum erfolgen, um unkontrollierbare Blasenbildung zu vermeiden. Vorteilhaft ist auch ein Vakuumvergießprozess, insbesondere zum Einbringen des nichtausgehärteten Matrixmaterials 170 in das Gehäuse 122.

Die erforderlichen Mischungsverhältnisse hängen in der Regel unter anderem ab von der Geometrie des akustisch-elektrischen Wandlerelements 176 und/oder des Wandlerkerns 134. Beispielsweise lassen sich dickere Piezoscheiben (beispielsweise Piezoscheiben mit einer Dicke von 2 mm und einem Durchmesser von 8 mm) durch die oben beschriebenen Verhältnisse gut dämpfen, wobei der gegebene Anteil der Kunststoffhohlkugeln eher die gerade noch gießbare Grenze angibt und demgegenüber auch deutlich reduziert werden darf, ohne dass sich eine Verschlechterung der Körperschallentkopplung ergibt. Der Wolfram-Anteil sollte hingegen nicht allzu weit reduziert werden. Mit der halben Menge an Wolfram (Mischungsverhältnis 1 : 1) ergibt sich eventuell ein im Maximum leicht reduziertes, dafür aber im zeitlichen Verlauf bereits deutlich länger andauerndes Übersprechen.

Im Falle eines dünneren Piezoelements bzw. akustisch-elektrischen Wandlerelements 136 (beispielsweise mit Abmessungen von 8 mm Durchmesser und einer Dicke von 0,2 mm) entstehen zusätzlich zu den primär genutzten Planar- und Dickenschwingungen noch Biegeschwingungen, die mit einer kleineren akustischen Impedanz auf den umgebenden Dämpfungsstoff 142 wirken. Wegen dieser kleineren Impedanz und der zusätzlich kleineren Masse des Piezos sind für diesen Anwendungsfall andere Mischungsverhältnisse vorteilhaft, bei denen weniger Härter-Komponente 178 zugegeben wird, was eine geringere Vernetzung bzw. eine reduzierte Shore-Härte bewirkt, und bei denen der Wolfram-Anteil bzw. der Anteil an zweitem Füllstoff 174 z.B. auf 1 : 1 reduziert wird. Wieder ein anderer Fall liegt vor, wenn ein solcher Piezo auf einen Impedanzanpasskörper 138 sowie optional mindestens einen thermischen Anpasskörper 140 gesetzt wird, wie in Figur 4 gezeigt, so dass zwar die Piezomasse selbst klein bleibt, die Biegefähigkeit des Piezoelements bzw. des akustisch-elektrischen Wandlerelements 136 jedoch unterdrückt wird.

Als Alternative zu den Kunststoffhohlkugeln bieten sich, wie oben beschrieben, eine Vielzahl anderer erster Füllstoffe 172 an. Beispielsweise bieten sich Glashohlkugeln an, die jedoch aufgrund ihrer harten Schale in der Regel nicht kompressibel sind und damit deutlich weniger wirksam sind. Bevorzugt sind dementsprechend erste Füllstoffe 172, bei welchen mindestens eine Hülle in einem festen Aggregatszustand vorgesehen ist, welche jedoch vorzugsweise kompressible oder verformbare Eigenschaften aufweist, wobei diese Hülle mindestens ein fluides Medium, vorzugsweise mindestens ein Gas, umschließt.

Ein in der Regel wichtiger Aspekt sind die Partikelgrößen der Partikel des ersten Füllstoffs 172, beispielsweise der Hohlkugeln, und/oder die Partikelgrößen des zweiten Füllstoffs 174, beispielsweise der Metallpartikel und/oder Keramikpartikel. Zumindest in newtonschen Fluiden und bei kugelförmigen Füllstoffen hängen die Viskosität $\eta$, die Sink- oder Aufstiegsgeschwindigkeit v, der Partikelradius r und die Dichten der Füllstoffe (allgemein im Folgendem mit $\rho_K$ bezeichnet, beispielsweise $\rho_{KE}$ in Figur 8 für den ersten Füllstoff 172 und $\rho_{KW}$ für den zweiten Füllstoff 174) und $\rho_F$ von Füllstoffen und Matrixmaterial 170 (insbesondere Fluid, beispielsweise Silikon) wie folgt zusammen:

$$\eta = \frac{2 \cdot g \cdot r^2}{9 \cdot v} \cdot (\rho_K - \rho_F).$$

Dies bedeutet, dass die Viskosität so hoch gewählt werden sollte, dass sich der Dämpfungsstoff 142 vor oder während der Aushärtung nicht entmischt, aber andererseits so niedrig gewählt werden sollte, dass der Stoff noch ausreichend verarbeitbar bleibt, beispielsweise gießfähig bleibt. Andererseits sollten die Füllstoffe so klein wie möglich gewählt werden. Andererseits beeinflusst wiederum die Füllstoffgröße deren Streufähigkeit gegenüber Ultraschallwellen. Optimale Streuung würde theoretisch im Bereich der Wellenlänge der verwendeten Ultraschallfrequenz erzielt, was allerdings bei einigen hundert kHz und den typischen Schallgeschwindigkeiten in Kunststoffen viel zu großen Partikeln entsprechen würde. Letztendlich ist eine Feinabstimmung der Partikelgrößen als Kompromiss zwischen einer Vermeidung von Entmischung und Optimierung von Streuung anzustreben.

Beispielsweise kann für die Wolfram-Partikel eine Partikelgröße von 10 $\mu$m angenommen werden, und eine Sedimentationszeit von 1 h oder mehr gefordert werden, was beispielsweise in einem Füll- und Ofenprozess eine realistische Zeit darstellt. Dann lässt sich bei einer angenommenen Fluiddichte von beispielsweise 1 g/cm$^3$ leicht errechnen, dass die Viskosität über den Füll- und Ofenprozess hinweg mindestens 500 mPas betragen sollte, um eine Entmischung zu verhindern. Ist die Viskosität ohnehin größer als dieser Wert, dann darf auch die Korngröße der Partikel größer ausfallen. Die Kunststoffhohlkugeln dürfen aufgrund des geringeren Dichteunterschieds $\rho_K$ - $\rho_F$ deutlich größer als die Wolfram-Partikel sein, ohne dass sich eine Entmischung einstellt. Typische mittlere Durchmesser der Kunststoffhohlkugeln können beispielsweise bei weniger als 10 $\mu$m (unexpandiert) bzw. 60 $\mu$m (expandiert) oder weniger liegen. Weiterhin ist eine Thixotropierung des Matrixmaterials 170 und/oder einer oder mehrerer der Komponenten 176, 178 des Matrixmaterials 170 zu bevorzugen. Eine Thixotropierung des Silikons kann beispielsweise durch einen Zusatz von pyrogener Kieselsäure erfolgen. Zusätzlich oder alternativ können auch weitere Füllstoffe wie zum Beispiel Silikate oder KeramikPartikel verwendet werden, auch in Kombination mit deutlich schwereren Metallpartikeln. Die resultierende Thixotropierung erhöht die Viskosität, wobei die Scherviskosität dennoch relativ niedrig sein kann, da das Silikon dann deutlich vom Newtonschen Fluid abweicht. Hierdurch können auch größere Füllstoffe in Schwebung gehalten werden, während dennoch eine gute Vergießbarkeit durch die Scherkräfte im Bereich beispielsweise einer Dosiernadel zum Einfüllen gegeben sein kann, da sich in diesem Bereich die Viskosität kurzzeitig reduziert und zumindest unter Vakuum ein Ausgießen auch enger und tiefer Spalte ermöglicht wird.

Für verbesserte, insbesondere optimale, Stoffeigenschaften des Dämpfungsstoffs 142 empfiehlt sich weiterhin ein Angelieren des Dämpfungsstoffs 142 und/oder einer oder mehrerer der Komponenten 176, 178 des Matrixmaterials 170 und/oder des gesamten Matrixmaterials 170. Dies kann beispielsweise durch eine Temperaturbehandlung erfolgen, beispielsweise bei 100 °C für eine halbe Stunde, gefolgt von einer Aushärtung bei 150 °C oder aber (je nach verwendetem Silikon-Basismaterial) in Form eines anderen Temperaturprofils, welches nicht sofort auf die Endaushärttemperatur fährt. Durch diese Maßnahme werden einerseits die inneren Stoffeigenschaften (z.B. Kohäsion, Anhaften von Silikon an den Füllstoffen, Vermeidung von Sprödigkeit) als auch die äußeren Eigenschaften, wie beispielsweise die Bildung einer geschlossenen Oberfläche und die Haftung verbessert.

Wie oben ausgeführt, sind die dargestellten Materialbeispiele lediglich exemplarisch zu verstehen. So können beispielsweise statt des Materials Wolfram auch andere Metalle als zweiter Füllstoff 174 eingesetzt werden, oder auch nicht metallische Füllstoffe, die deutlich schwerer sind als das Matrixmaterial 170, beispielsweise das Silikon.

In dem Verfahrensgang in Figur 9 sind die oben beschriebenen optionalen Verfahrensschritte exemplarisch dargestellt. So sind dort mit der Bezugsziffer 182 exemplarisch die Einzelkomponenten des oben beschriebenen Verfahrens bezeichnet. Mit der Bezugsziffer 184 sind allgemein ein oder mehrere Mischungsschritte bezeichnet. Die Bezugsziffer 186 bezeichnet die gemischten Komponenten. Mit der Bezugsziffer 188 wird die Beimischung der Härter-Komponente 178 bezeichnet. Die Bezugsziffer 190 bezeichnet den nicht-ausgehärteten Dämpfungsstoff 142. Die Bezugsziffer 192 bezeichnet allgemein einen Aushärtungsvorgang. Weiterhin kann die Bezugsziffer 192 jedoch auch noch verschiedene andere Verfahrensschritte bezeichnen, wie beispielsweise ein Mischen und/oder ein Entgasen und/oder ein Dosieren, insbesondere ein Einbringen des nicht-ausgehärteten Dämpfungsstoffs 190 in den Innenraum 126. Weiterhin kann die Bezugsziffer 192 noch ein Angelieren umfassen, wie oben beschrieben. Mit der Bezugsziffer 194 ist schließlich der ausgehärtete Dämpfungsstoff bezeichnet.

## Patentansprüche

1. Ultraschallwandler (114) zum Einsatz in einem fluiden Medium, umfassend mindestens ein Gehäuse (122) und mindestens einen zumindest teilweise in dem Gehäuse (122) aufgenommenen Wandlerkern (134), wobei der Wandlerkern (134) mindestens ein akustisch-elektrisches Wandlerelement (136) umfasst, wobei in dem Gehäuse (122) weiterhin zumindest ein Dämpfungsstoff (142) aufgenommen ist, wobei der Dämpfungsstoff (142) mindestens ein Matrixmaterial (170) und mindestens einen in das Matrixmaterial (170) eingebrachten ersten Füllstoff (172) und mindestens einen in das Matrixmaterial (170) eingebrachten zweiten Füllstoff (174) aufweist, wobei der erste Füllstoff (172) ein geringeres spezifisches Gewicht aufweist als das Matrixmaterial (170) und wobei der zweite Füllstoff (174) ein höheres spezifisches Gewicht aufweist als das Matrixmaterial (170), wobei das Matrixmaterial (170) ein Silikonmaterial umfasst, wobei der erste Füllstoff (172) Hohlkörper umfasst, wobei der zweite Füllstoff (174) Wolfram umfasst.

2. Ultraschallwandler (114) nach dem vorhergehenden Anspruch, wobei das Matrixmaterial (170) im nicht-ausgehärteten Zustand eine oder mehrere der folgenden Eigenschaften aufweist:

   - eine Viskosität von mindestens 200 mPas, insbesondere von mindestens 500 mPas;
   - thixotrope Eigenschaften.

3. Ultraschallwandler (114) nach einem der vorhergehenden Ansprüche, wobei die Hohlkörper ausgewählt sind aus: Hohlkugeln; Hohlkörpern mit einer verformbaren Schale, insbesondere einer Kunststoffschale; Kunststoff-Hohlkörpern, insbesondere Gas-gefüllten Kunststoff-Hohlkörpern; Glas-Hohlkörpern, insbesondere Gas-gefüllten Glas-Hohlkörpern.

4. Ultraschallwandler (114) nach einem der vorhergehenden Ansprüche, wobei der erste Füllstoff (172) Partikel mit einer Größe bei Normalbedingungen von maximal 200 $\mu$m aufweist, vorzugsweise von maximal 100 $\mu$m und besonders bevorzugt von maximal 20 $\mu$m oder weniger als 20 $\mu$m.

5. Ultraschallwandler (114) nach einem der vorhergehenden Ansprüche, wobei der erste Füllstoff (172) ein spezifisches Gewicht von nicht mehr als 1,0 g/cm$^3$, insbesondere von nicht mehr als 0,5 g/cm$^3$, vorzugsweise von nicht mehr als 0,1 g/cm$^3$ und besonders bevorzugt von nicht mehr als 0,08 g/cm$^3$ aufweist.

6. Ultraschallwandler (114) nach einem der vorhergehenden Ansprüche, wobei der erste Füllstoff (172) einen Gewichtsanteil von mindestens 0,05 %, vorzugsweise von mindestens 0,15 % und besonders bevorzugt von mindestens 0,5 % an dem Dämpfungsstoff (142) aufweist.

7. Ultraschallwandler (114) nach einem der vorhergehenden Ansprüche, wobei der zweite Füllstoff (174) ein spezifisches Gewicht von mindestens 5 g/cm$^3$ aufweist, vorzugsweise von mindestens 10 g/cm$^3$ und besonders bevorzugt von mindestens 15 g/cm$^3$.

8. Ultraschallwandler (114) nach einem der vorhergehenden Ansprüche, wobei der zweite Füllstoff (174) ein Pulver mit einer Partikelgröße von nicht mehr als 50 μm, vorzugsweise nicht mehr als 10 μm, insbesondere nicht mehr als 5 μm und besonders bevorzugt von nicht mehr als 2 μm aufweist.

9. Ultraschallwandler (114) nach einem der vorhergehenden Ansprüche, wobei der zweite Füllstoff (174) einen Gewichtsanteil von mindestens 15 %, vorzugsweise von mindestens 50 % und besonders bevorzugt von mindestens 66 % an dem Dämpfungsstoff (142) aufweist.

10. Verfahren zur Herstellung eines Ultraschallwandlers (114), insbesondere eines Ultraschallwandlers (114) nach einem der vorhergehenden Ansprüche, wobei mindestens ein Wandlerkern (134) zumindest teilweise in ein Gehäuse (122) eingebracht wird, wobei der Wandlerkern (134) mindestens ein akustisch-elektrisches Wandlerelement (136) umfasst, wobei weiterhin in das Gehäuse (122) mindestens ein Dämpfungsstoff (142) eingebracht wird, wobei in dem Dämpfungsstoff (142) mindestens ein Matrixmaterial (170) und mindestens ein in das Matrixmaterial (170) eingebrachter erster Füllstoff (172) sowie mindestens ein in das Matrixmaterial (170) eingebrachter zweiter Füllstoff (174) aufgenommen wird, wobei der erste Füllstoff (172) ein geringeres spezifisches Gewicht aufweist als das Matrixmaterial (170) und wobei der zweite Füllstoff (174) ein höheres spezifisches Gewicht aufweist als das Matrixmaterial (170)), wobei das Matrixmaterial (170) ein Silikonmaterial umfasst, wobei der erste Füllstoff (172) Hohlkörper umfasst, wobei der zweite Füllstoff (174) Wolfram umfasst.

11. Verfahren nach dem vorhergehenden Anspruch, wobei das Matrixmaterial (170) mindestens ein aushärtbares Material aufweist, wobei das aushärtbare Material in einem nicht-ausgehärteten Zustand in das Gehäuse (122) eingebracht wird und anschließend ausgehärtet wird.

## Claims

1. Ultrasound transducer (114) for use in a fluid medium, comprising at least one housing (122) and at least one transducer core (134) at least partly accommodated in the housing (122), wherein the transducer core (134) comprises at least one acoustic-electrical transducer element (136), wherein at least one damping material (142) is additionally accommodated in the housing (122), wherein the damping material (142) includes at least one matrix material (170) and at least one first filler (172) introduced into the matrix material (170) and at least one second filler (174) introduced into the matrix material (170), wherein the first filler (172) has a lower specific weight than the matrix material (170) and wherein the second filler (174) has a higher specific weight than the matrix material (170), wherein the matrix material (170) comprises a silicone material, wherein the first filler (172) comprises hollow bodies, wherein the second filler (174) comprises tungsten.

2. Ultrasound transducer (114) according to the preceding claim, wherein the matrix material (170) in the uncured state has one or more of the following properties:

   - a viscosity of at least 200 mPas, especially of at least 500 mPas;
   - thixotropic properties.

3. Ultrasound transducer (114) according to either of the preceding claims, wherein the hollow bodies are selected from: hollow beads; hollow bodies having a deformable shell, especially a plastic shell; hollow plastic bodies, especially gas-filled hollow plastic bodies; hollow glass bodies, especially gas-filled hollow glass bodies.

4. Ultrasound transducer (114) according to any of the preceding claims, wherein the first filler (172) includes particles having a size under standard conditions of not more than 200 μm, preferably of not more than 100 μm and more preferably of not more than 20 μm or less than 20 μm.

5. Ultrasound transducer (114) according to any of the preceding claims, wherein the first filler (172) has a specific weight of not more than 1.0 g/cm$^3$, especially of not more than 0.5 g/cm$^3$, preferably of not more than 0.1 g/cm$^3$ and more preferably of not more than 0.08 g/cm$^3$.

6. Ultrasound transducer (114) according to any of the preceding claims, wherein the first filler (172) has a proportion by weight of at least 0.05%, preferably of at least 0.15% and more preferably of at least 0.5% of the damping material (142).

7. Ultrasound transducer (114) according to any of the preceding claims, wherein the second filler (174) has a specific weight of at least 5 g/cm$^3$, preferably of at least 10 g/cm$^3$ and more preferably of at least 15 g/cm$^3$.

8. Ultrasound transducer (114) according to any of the preceding claims, wherein the second filler (174) comprises a powder having a particle size of not more than 50 $\mu$m, preferably not more than 10 $\mu$m, especially not more than 5 $\mu$m and more preferably not more than 2 $\mu$m.

9. Ultrasound transducer (114) according to any of the preceding claims, wherein the second filler (174) has a proportion by weight of at least 15%, preferably of at least 50% and more preferably of at least 66% of the damping material (142).

10. Method of producing an ultrasound transducer (114), especially an ultrasound transducer (114) according to any of the preceding claims, wherein at least one transducer core (134) is at least partly introduced into a housing (122), wherein the transducer core (134) comprises at least one acoustic-electrical transducer element (136), wherein at least one damping material (142) is additionally accommodated in the housing (122), wherein the damping material (142) incorporates at least one matrix material (170) and at least one first filler (172) introduced into the matrix material (170) and at least one second filler (174) introduced into the matrix material (170), wherein the first filler (172) has a lower specific weight than the matrix material (170) and wherein the second filler (174) has a higher specific weight than the matrix material (170), wherein the matrix material (170) comprises a silicone material, wherein the first filler (172) comprises hollow bodies, wherein the second filler (174) comprises tungsten.

11. Method according to the preceding claim, wherein the matrix material (170) includes at least one curable material, wherein the curable material is introduced into the housing (122) in an uncured state and is then cured.

**Revendications**

1. Transducteur ultrasonique (114) destiné à une utilisation dans un milieu fluide, comprenant au moins un boîtier (122) et au moins un noyau de transducteur (134) logé, tout au moins en partie, dans le boîtier (122), où le noyau de transducteur (134) comprend au moins un élément transducteur (136) électro-acoustique, où tout au moins un matériau amortisseur (142) est en outre logé dans le boîtier (122), où le matériau amortisseur (142) présente au moins un matériau de matrice (170) et au moins une première charge de remplissage (172) mise en place dans le matériau de matrice (170) et au moins une deuxième charge de remplissage (174) mise en place dans le matériau de matrice (170), où la première charge de remplissage (172) présente un poids spécifique inférieur au matériau de matrice (170) et où la deuxième charge de remplissage (174) présente un poids spécifique supérieur au matériau de matrice (170), où le matériau de matrice (170) comprend un matériau en silicone, où la première charge de remplissage (172) comprend des corps creux et où la deuxième charge de remplissage (174) comprend du tungstène.

2. Transducteur ultrasonique (114) selon la revendication précédente, où le matériau de matrice (170) présente une ou plusieurs des propriétés suivantes à l'état non polymérisé :

    - une viscosité d'au moins 200 mPas, en particulier d'au moins 500 mPas ;
    - des propriétés thixotropes.

3. Transducteur ultrasonique (114) selon l'une des revendications précédentes, où les corps creux sont sélectionnés parmi : des sphères creuses ; des corps creux avec une coque déformable, en particulier une coque en plastique ; des corps creux en plastique, en particulier des corps creux en plastique remplis de gaz ; des corps creux en verre, en particulier des corps creux en verre remplis de gaz.

4. Transducteur ultrasonique (114) selon l'une des revendications précédentes, où la première charge de remplissage (172) présente des particules dont la taille est, dans des conditions normales, de 200 $\mu$m au plus, de préférence de 100 $\mu$m au plus et en particulier de préférence de 20 $\mu$m au plus ou inférieure à 20 $\mu$m.

**5.** Transducteur ultrasonique (114) selon l'une des revendications précédentes, où la première charge de remplissage (172) présente un poids spécifique qui n'est pas supérieur à 1,0 g/cm$^3$, en particulier qui n'est pas supérieur à 0,5 g/cm$^3$, de préférence qui n'est pas supérieur à 0,1 g/cm$^3$ et en particulier de préférence qui n'est pas supérieur à 0,08 g/cm$^3$.

**6.** Transducteur ultrasonique (114) selon l'une des revendications précédentes, où la première charge de remplissage (172) présente au niveau du matériau amortisseur (142) une proportion en poids d'au moins 0,05 %, de préférence d'au moins 0,15 % et en particulier de préférence d'au moins 0,5 %.

**7.** Transducteur ultrasonique (114) selon l'une des revendications précédentes, où la deuxième charge de remplissage (174) présente un poids spécifique d'au moins 5 g/cm$^3$, de préférence d'au moins 10 g/cm$^3$ et en particulier de préférence d'au moins 15 g/cm$^3$.

**8.** Transducteur ultrasonique (114) selon l'une des revendications précédentes, où la deuxième charge de remplissage (174) présente une poudre dont la taille des particules n'est pas supérieure à 50 μm, de préférence qui n'est pas supérieure à 10 μm, en particulier qui n'est pas supérieure à 5 μm et en particulier de préférence qui n'est pas supérieure à 2 μm.

**9.** Transducteur ultrasonique (114) selon l'une des revendications précédentes, où la deuxième charge de remplissage (174) présente au niveau du matériau amortisseur (142) une proportion en poids d'au moins 15 %, de préférence d'au moins 50 % et en particulier de préférence d'au moins 66 %.

**10.** Procédé destiné à la fabrication d'un transducteur ultrasonique (114), en particulier d'un transducteur ultrasonique (114) selon l'une des revendications précédentes, où au moins un noyau de transducteur (134) est mis en place, tout au moins en partie, dans un boîtier (122), où le noyau de transducteur (134) comprend au moins un élément transducteur (136) électro-acoustique, où au moins un matériau amortisseur (142) est en outre mis en place dans le boîtier (122), où au moins un matériau de matrice (170) et au moins une première charge de remplissage (172), mise en place dans le matériau de matrice (170), ainsi qu'au moins une deuxième charge de remplissage (174), mise en place dans le matériau de matrice (170), sont logés dans le matériau amortisseur (142), où la première charge de remplissage (172) présente un poids spécifique inférieur au matériau de matrice (170) et où la deuxième charge de remplissage (174) présente un poids spécifique supérieur au matériau de matrice (170), où le matériau de matrice (170) comprend un matériau en silicone, où la première charge de remplissage (172) comprend des corps creux et où la deuxième charge de remplissage (174) comprend du tungstène.

**11.** Procédé selon la revendication précédente, où le matériau de matrice (170) présente au moins un matériau polymérisable, où le matériau polymérisable est mis en place dans le boîtier (122) dans un état non polymérisé, puis est ensuite polymérisé.

FIG. 1

110    124    116

122    P1 ←→ P2    122

114    114

120

118

112

FIG. 2

146    142    144    114

H  D    P    122

136    142

134    A    126

F

132    138    128,130

FIG. 3

142    136    114

122

126

134    148

132    138    128,130

FIG. 4

142    136    140    114

122

142

134    126

132    138    128,130

**FIG. 5A**

**FIG. 5B**

**FIG. 6**

# FIG. 7A

# FIG. 7B

FIG. 8

FIG. 9

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 20302582 U1
- EP 0766071 A1
- DE 102007010500 A1
- DE 102009046144

### In der Beschreibung aufgeführte Nicht-Patentliteratur

- Passive Materials for High Frequency Ultrasound Transducers. **H. WANG et al.** SPIE Conference Proceedings. Society of Photo-Optical Instrumentation Engineers, 1999
- **F. EI-TANTAWY et al.** A novel ultrasonic transducer backing from porous epoxy resin-titanium-silane coupling agent and plasticizer composites. *Materials Letters,* 2003, vol. 58, 154-158
- **M. GREWE et al.** Acoustic Properties of Particle/Polymer Composites for Ultrasonic Transducer Backing Applications. *IEEE Transactions on Ultrasonics, Ferroelectrics and Frequency Control,* November 1990, vol. 37 (6), 506-514